**Europäisches Patentamt**

**European Patent Office**

**Office européen des brevets**

(19)

(11) Publication number : **0 393 912 B1**

(12)

# EUROPEAN PATENT SPECIFICATION

(45) Date of publication of patent specification :
24.11.93 Bulletin 93/47

(51) Int. Cl.⁵ : **B60C 9/20,** B60C 15/00

(21) Application number : **90303860.2**

(22) Date of filing : **10.04.90**

---

(54) **Bias tyre for aircraft.**

---

(30) Priority : **18.04.89 JP 98189/89**

(43) Date of publication of application :
24.10.90 Bulletin 90/43

(45) Publication of the grant of the patent :
24.11.93 Bulletin 93/47

(84) Designated Contracting States :
**DE FR GB**

(56) References cited :
**FR-A- 2 049 539**
**FR-A- 2 388 684**
**US-A- 3 438 827**
**US-A- 4 029 137**

(73) Proprietor : **SUMITOMO RUBBER INDUSTRIES LIMITED**
**1-1 Tsutsuicho 1-chome Chuo-ku**
**Kobe-shi Hyogo-ken (JP)**

(72) Inventor : **Ootani, Takao**
**97-26 Nagasuna, Noguchi-cho**
**Kakogawa-shi, Hyogo-ken (JP)**

(74) Representative : **Stewart, Charles Geoffrey**
**SP TYRES UK LIMITED Tyre Technical Division**
**Fort Dunlop, Erdington, Birmingham B24 9QT (GB)**

EP 0 393 912 B1

## Description

The present invention relates to a bias tyre for aircraft.

Since the size and flight speed of aircraft have increased recently, the operating speed and the load acting on the tyres have also increased, and therefore, a tyre is required which is lighter in weight in addition to possessing the following improved characteristics.

1. To have resistance against a succession of large deformations, since the deformation, for example, in a loaded tyre can be as large as 28 to 38%, in order to effectively lower the shock then an aircraft takes off or lands on a runway.

2. To have resistance against a high-speed rotation under a heavy load and a large deformation, since the take-off and landing speed has been increased due to the ability of aircraft to fly at higher speeds.

3. To be able to resist taxiing conditions when moving between the runway and the gate, where a large load acts for a relatively long time in spite of a lower speed.

A tyre for aircraft is used at high internal pressures of approximately 10 to 20 kg/cm$^2$ in order to bear the heavy load, but for safe operation it is required to be capable of withstanding in excess of four times this pressure.

Such tyres, as designed for use as aircraft tyres, employ a cross ply structure where the carcass cords are placed to mutually cross between adjacent plies.

However, while a tyre having such structure has the advantage of having a high horizontal rigidity due to the carcass cords being crossed at a large angle, it has a disadvantage in that the number of carcass plies has to be large to provide sufficient strength in the tyre, thus causing the tyre to be heavier in weight. It is also a problem that the tread part is inferior in wear resistance, as the rigidity of the tread part is lower in comparison with a radial tyre which has a strong belt.

A bias tyre for vehicles comprising the features of the preamble of claim 1 is known, e.g. from patent documents FR-A-2049539 or FR-A-2388784.

It is hence a primary object of the invention to provide a bias tyre for aircraft which is lighter in weight without causing deterioration in durability.

The inventor of this application discovered that a heavier load acts in the tread part, especially the ground contact surface, and a smaller load acts in the sidewall to bead part in comparison with the tread part. Thus in as far as the carcass has a sufficient strength in the tread part, the carcass strength may be reduced relatively between the sidewall part and the bead part.

According to the invention, a bias tyre for aircraft comprises a carcass including a plurality of at least three carcass ply groups each composed of at least one carcass ply of carcass cords having an inclination angle of 30 to 45 degrees to the tyre's equator and extending through a tread part, providing a ground contacting surface, and through sidewall parts to the bottom surfaces of at least one bead core in each bead part, the carcass ply groups being distinguished by the folding direction of the carcass plies at the bead core or by the bead cores around which the carcass plies are folded in the case where plural bead cores are provided and a cap ply layer of cords being provided radially inwards of the tread part and between the carcass ply groups which has such a width that its outer both ends are terminated outward in the radial direction of the bead core or bead cores and the cords of the cap ply layer crossing the carcass cords of each carcass ply adjacent to the cap ply layer, characterised in that the inclination angle of the carcass cords is gradually reduced in successive steps of 1 to 5 degrees from the first group to the third group of the carcass ply groups aligned in succession from inside to outside the tyre.

Therefore the tread part is strengthened by the cap ply layer which has a length less than the carcass plies which fold around the bead part. It is evident that the bead part is thus lighter in weight compared with a tyre having all the carcass plies turned up around the bead core.

The present invention results from finding that in a tyre for aircraft, a heavier load acts in the tread part, while the load acting in the sidewall and the bead parts is smaller than the load acting in the tread part.

Thus, the cap ply layer mainly strengthens the tread part to improve the function of the carcass, while not adding to the regions between the sidewall part and the bead part, thereby realising a lighter weight of tyre.

Furthermore, the cap ply layer is placed between the carcass ply groups which groups are distinguished by the folding direction of the carcass plies at the bead core or cores around which the carcass plies are folded or wrapped.

By this method, the attachment of the cap ply layer and the productivity of tyre manufacture are improved.

If the cap ply layer is placed close to the inner cavity of the tyre or under the carcass plies it was found that a crack, rumple or the like was formed by thermal contraction due to vulcanisation, because the cap ply layer was not folded around and located by the bead core as mentioned above and by placing the cap ply layer among the carcass ply groups as aforementioned, the problem is overcome.

The inventors have also found that by placing a thick rubber layer between the carcass and a breaker, the tread part can be retreaded or reconditioned without damaging the carcass, thus increasing the life of the overall tyre.

Embodiments will now be disclosed by way of example only in conjunction with the attached drawings, in which:

Figure 1 is a part or cross-sectional view showing one of the embodiments of the invention;

Figure 2 is a sectional view schematically showing the reconditioning of plies of its carcass; and

Figure 3 is a sectional view showing another embodiment.

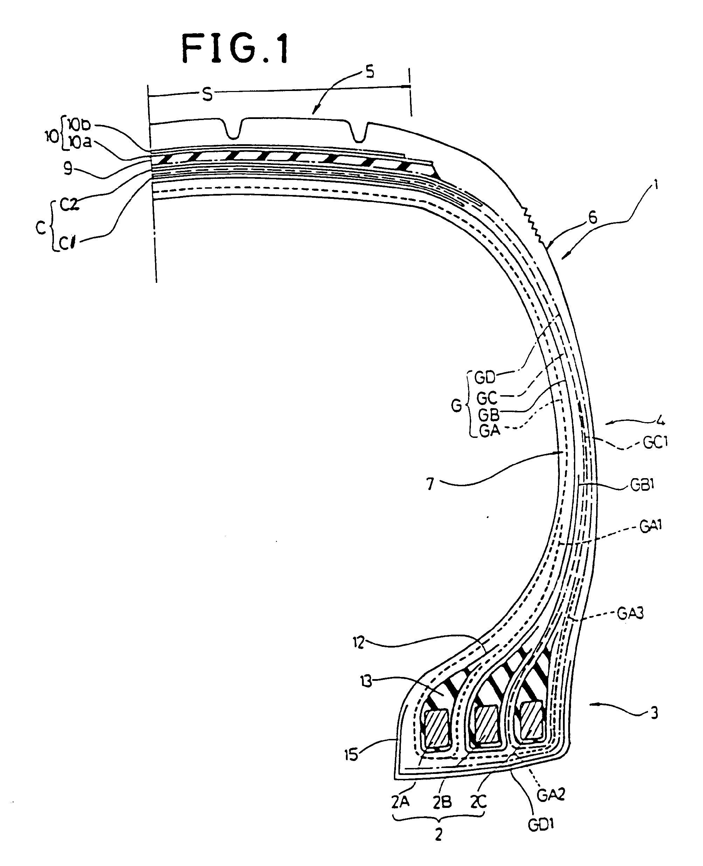

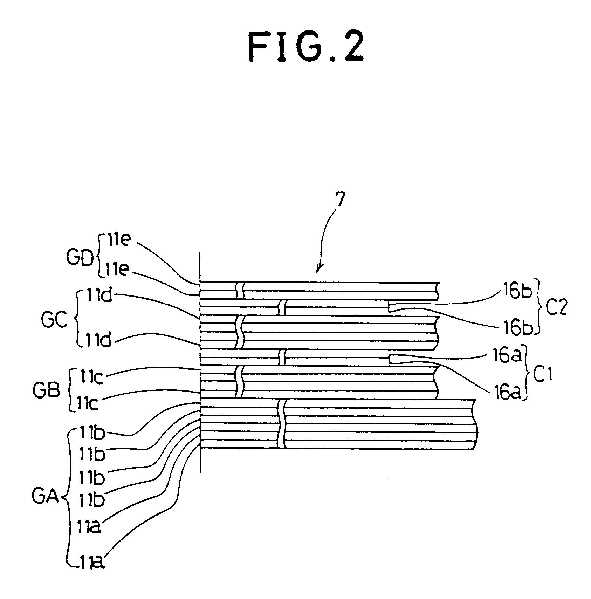

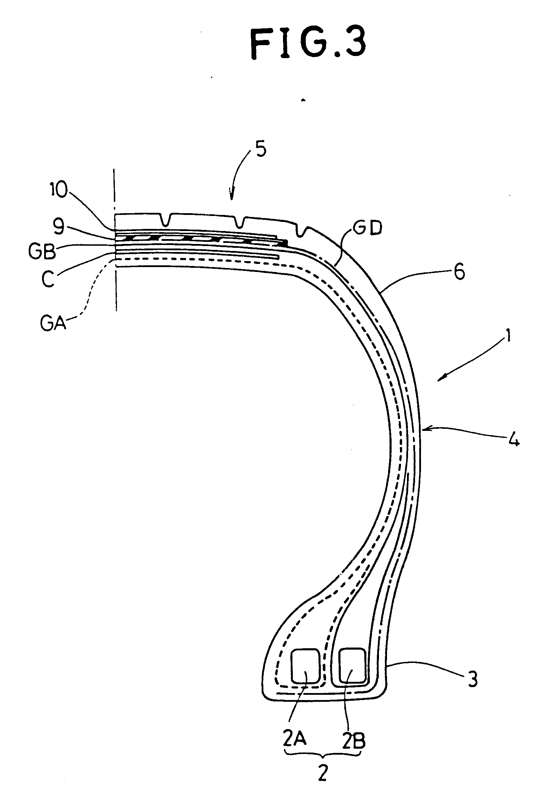

The tyre 1 shown in Figures 1 and 2 is a 49 x 17 32PR bias tyre for aircraft, wherein the tyre 1 is a toroidal shaped enclosure 6 comprising a bead part 3 reinforced by annular bead cores 2, a sidewall 4 extending from the bead part 3 to a tread part 5 between the outer ends of the two sidewalls 4. Each of the bead core assemblies 2 includes a first bead core 2A, a second bead core 2B and a third bead core 2C positioned axially outwardly from the inside of the tyre. The tyre 1 is provided with a carcass 7 and a breaker 10 placed inwardly of the tread part 5 and radially outside the carcass 7 and spaced therefrom by a retread rubber layer 9. The carcass 7 comprises a plurality of carcass ply groups G and cap ply layers C placed between them.

The plurality of carcass ply groups G is composed of a first inner carcass ply group GA, a second inner carcass ply group GB, a third inner carcass ply group GC and an outer carcass ply group GD, which are all arranged in sequence from the inside to the outside of the tyre.

The first inner carcass ply group GA (shown by a dotted line in Figure 1) comprises six carcass plies 11a, 11a, 11b,... which extend from the tread part 5 through the sidewall part and are folded at the bottom surface of the first bead core 2A from the inside to the outside of the tyre. The second inner carcass ply group GB (shown by a solid line in Figure 1) comprises four carcass plies 11c, ... which are folded at the bottom surface of the second bead core 2B from the inside to the outside. The third inner carcass ply group GC (shown by a broken line in Figure 1) comprises four carcass plies 11d,... which are folded at the bottom surface of the third bead core 2C from the inside to the outside. The outer carcass ply group GD (shown by a single dotted broken line in Figure 1) comprises two carcass plies 11e and 11e which pass through the tread part 5, sidewalls 4 and extend along the bottom surface of the bead core from the outside to the inside of the third bead core 2C.

The outer four carcass plies 11b, ... of the six carcass plies 11a. . . , 11b. . . of the first inner carcass ply group GA, the carcass plies 11c... of the second inner carcass ply group GB and the carcass plies 11d... of the third inner carcass ply group GC have folding parts GA1 , GB2 and GC3 respectively, folding at the first, second and third bead cores 2A, 2B and 2C outwardly in the radial direction.

The two inner carcass plies 11a and 11a of the first inner carcass ply group GA extend along the outer surface of the folding part GC1 of the third bead core 2c by means of the bottom part GA2 passing along the bottom surface of the first to third bead cores 2A to 2C, whereby forming a folding part GA3 folding outwardly in the radial direction inside the group of outer carcass plies GD. The outer carcass ply group GD has an extended part GD1 which is extended below the bottom part GA2 of the carcass ply 10a to the inside in the direction of the tyre's axis.

In addition, in each of the main parts of the first to third carcass ply groups GA to GC folding around the first to third bead cores 2A to 2C and each of the folding parts GA1 to GC1, are positioned fillers 12 surrounding the first to third bead cores 2A to 2C respectively are positioned, and inside the fillers 12, bead apexes 13... having a tapered triangular shape and made of hard rubber and extending outwardly in the radial direction are provided to increase the rigidity of the bead part 3.

For the bead apex 13 it is preferable to use a hard rubber, for example, a rubber that has the dynamic elasticity modulus (E∗) of 220 kg/cm$^2$ or more, measured from a sample of 4mm width x 30mm length x 2mm thickness by using a viscoelasticity spectrometer made by Iwamoto Manufacturing Co; under test conditions of 70°C, 10% of initial strain, 2.0% of amplitude and at 50 Hz frequency.

Along the bead part 3, a chafer 15 is positioned to prevent damage by rubbing.

For the carcass cords of the carcass plies 11a to 11e, organic fibres chosen from the group consisting of polyvinyl alcoholic fibres, polychlorinated vinylidene fibres, polychlorinated vinyl fibres, polyacrylonitrile fibres, polyethylene fibres, polyurethane fibres, cellulose fibres, cellulose ester fibres and aromatic polyamide fibres, and especially aliphatic polyamide fibres such as nylon 66 can be used.

The carcass cords of the first, second and third inner carcass ply groups GA to GC are inclined at an angle in the range of 20 to 50 degrees, preferably 30 to 45 degrees to the tyre's equator. Furthermore, the inclination angle of the carcass cords gradually reduces from the first to third groups of carcass plies GA to GC aligned in succession from inside to outside the tyre.

For example, the inclination of the cords of the first inner carcass ply group GA is 25 to 50 degrees, preferably 30 to 45 degrees. The first inner carcass ply group cord angle is 40 degrees. The inclination of cords of the second and third carcass ply group GB and GC are reduced in successive steps of 1 to 5 degrees, preferably about 2 degrees compared with that of the first carcass ply group GA. Accordingly in the case that the inclination of the cords of the first inner carcass ply group GA is 40 degrees, the inclination of cords of the second inner carcass ply group GB is set at 38 degrees, and the inclination of cords of the third inner carcass ply groups GC at approximately 36 degrees.

In addition, in the carcass plies 11a to 11e of the carcass ply groups GA to GC, carcass cords are aligned in such manner as to cross mutually. By reducing the inclination of cords from inside to outside in such a manner, the strength of plies is improved from inside to outside, and a preferably specific inflated shape can be obtained. For this purpose, the inclination of the carcass cords of the outer carcass ply group GD is set at a smaller angle, for example approximately 34 degrees.

The folding parts GA1 to GC1 of the first to third carcass ply groups GA to GC are successive increased in height toward the outside, and especially the folding part GC1 of the third carcass ply group GC is terminated near the widest position of the tyre.

The cap ply layer C is inside the tread part 5, and comprises a first cap ply C1 which is provided between the second inner carcass ply group GB and the third inner carcass ply group GC and second cap ply C2 which is provided between the outer carcass ply group GD and the third inner carcass ply group GC.

Each cap ply layer C1 and C2 comprises two cap ply layers 16a, 16a and 16b, 16b as shown in Figure 2. The cap cords of the first cap ply layer C1 are arranged at an angle of 36 degrees to the tyre equator and mutually cross between the two cap ply layers 16a. The cap cords of the second cap ply layer C2 are arranged at an angle of 34 degrees to the tyre equator and mutually cross between the two cap ply layers 16b. The cap cords are also placed in such directions that they respectively cross the adjoining carcass cords.

In each of the first and second cap ply layers C1 and C2, at least one cap ply layer 16a and 16b is 100 to 130% and more preferably 110 to 130% of the width S of the ground contact surface of the tyre in the direction of tyre's axis. If it is wider than this width separation tends to occur at the outer edges in the direction of the tyre's axis, and if it is narrower the expansion of the shoulder side part becomes too large in the operation of the tyre, which causes rapid wear at the shoulder part. The other cap ply layers 10a and 10b are also preferably set within the aforementioned range, but they may be set at a smaller or greater width. In both cases, the outer ends of the cap plies 16a and 16b are terminated outside the bead part in the radial direction, and thereby they become smaller in width in comparison with the carcass plies 11a to 11e which are folded at the bead core 2, thus reducing the weight of the tyre. Moreover, while such a cap ply layer C efficiently strengthens the tread part 5 on which a heavy load acts in operation, because it does not extend into the outside parts such as the sidewall part 4 and the bead part 3 which comparatively have excessive strength, a lighter tyre can be produced without affecting the durability of the overall tyre.

Furthermore, by placing such cap ply layer C between the carcass ply groups G, a stress caused by the contraction of the cap ply layer C due to thermal action in the vulcanisation can be borne by the carcass ply group G placed inside it, and this distortion cracking or waving of the inner liner rubber is prevented which occurs if the cap ply layer C is placed on the inside of the carcass.

In addition, the carcass cords and cap cords chosen from the aforementioned group of organic fibres are buried in a relatively soft rubber such as topping rubbers having a modulus at 300% extension of 80 to 160 kg/cm$^2$, preferably 90 to 110 kg/cm$^2$ to form the plies 11a to 11e, 16a and 16b.

The breaker 10 is formed on a retread rubber layer 9 outside the carcass 7.

The breaker 10 comprises a wide inside breaker ply 10a and an outer breaker ply 10b. The plies 10a and 10b are formed to have approximately same width as the cap plies 16a and 16b.

The breaker 10 provides a hoop effect and an envelope effect to the tread part. The hoop effect prevents radially outward deformation of the crown part due to centrifugal force which accompanies revolving at a very high speed. It also prevents the growth of tyre where the deformation remains permanently set due to repeated distortions.

Moreover, the breaker 10 functions as a protective layer preventing damage in the ground contact surface from reaching the carcass 7.

Preferably the breaker cords are chosen from the same group of organic fibre cords as the carcass and they are placed at an inclination of 45 degrees or less, preferably 35 degrees or less to the tyre's equator as well as crossing between the plies 10a and 10b.

The retread rubber layer 9 extends across the entire width of the inside of the breaker 10 and is 2.0mm or more in thickness.

Thus, in retreading or reconditioning the tyre, damage to the carcass 7 upon removing the tread rubber and the breaker 10 is prevented, and by using a softer rubber than the tread rubber for the retread rubber layer 9, removal becomes easier and the damage to the carcass 7 can be prevented. The carcass 7 may also be protected by using a rubber having the same hardness as the tread rubber or harder rubber.

Figure 3 shows another embodiment using two bead cores 2 composed of first and second bead cores 2A and 2B placed in the bead part inside the tyre.

In this embodiment, a cap ply C is formed between the first inner carcass ply group GA and the second inner carcass ply group GB. In such a manner, as far as it is between the carcass ply groups G, the cap ply layer C may be employed between various carcass ply groups G.

Prototype bias tyres for aircraft, measuring 49 x 17 32PR, 46 x 16 28PR were produced to the specifications shown in Figure 1 and Table 1, and a durability test was performed based on the U.S. Aviation Bureau TSO/C62c standard. Weights of the tyres were measured, and under accelerated test conditions the tyres were retreaded repeatedly.

In the embodiments 1 and 2, the weight of the tyre was reduced without deteriorating its durability. In both tyres, retreading six times was possible, and thus it can be seen that a tyre of the invention has the same retreadability as conventional tyres.

Thus, in a bias tyre for aircraft of the invention by employing a cap ply layer of a small width between carcass ply groups, the weight of the tyre can be reduced without deteriorating the durability of the tyre.

Table 1

| | Embodiment 1 | Comparison example 1 | Embodiment 2 | Comparison example 2 |
|---|---|---|---|---|
| Measurement of tire | 49×17 32PR | | 46×16 28PR | |
| Number of bead cores (one side) | 3 | | 3 | |
| Inner carcass ply group<br>　Total ply number | 14 | 18 | 12 | 14 |
| 　First inner carcass ply group (GA)<br>　　Ply number<br>　　Inclination of cords | 6<br>40° | 6<br>40° | 6<br>40° | 6<br>40° |
| 　Second inner carcass ply group (GB)<br>　　Ply number<br>　　Inclination of cords | 4<br>38° | 6<br>38° | 4<br>38° | 4<br>38° |
| 　Third inner carcass ply group (GC)<br>　　Ply number<br>　　Inclination of cords | 4<br>36° | 6<br>36° | 2<br>36° | 4<br>36° |
| Outer carcass ply group (GD)<br>　Ply number<br>　Inclination of cords | 2<br>34° | 2<br>34° | 2<br>34° | 2<br>34° |
| Cap ply layer<br>　Total ply number | 4 | | 2 | |
| 　First cap ply layer (C1)<br>　　Location | Between GB and GC | Absent | Between GC and GD | Absent |
| 　　Ply number<br>　　Inclination of cords | 2<br>36° | | 2<br>34°<br>— | |
| 　Second cap ply layer (C2)<br>　　Location | Between GC and GD | | — | |
| 　　Ply number<br>　　Inclination of cords | 2<br>34° | | —<br>— | |
| Breaker layer<br>　Ply number<br>　Inclination of cords | 2<br>34 | 2<br>34 | 2<br>34 | 2<br>34 |
| Weight of tire kg | 104 | 114 | 76 | 82 |
| Durability (TSO-C62c) | Approved | Approved | Approved | Approved |
| Retread number | 6 | 6 | 6 | 6 |

## Claims

1. A bias tyre for aircraft comprising a carcass (7) including a plurality (G) of at least three carcass ply groups (GA....GD) each composed of at least one carcass ply (11) of carcass cords having an inclination angle of 30 to 45 degrees to the tyre's equator and extending through a tread part (5), providing a ground contacting surface, and through sidewall parts (4) to the bottom surfaces of at least one bead core (2) in each bead part (3), the carcass ply groups (GA....GD) being distinguished by the folding direction of the carcass plies (11) at the bead core (2) or by the bead cores (2) around which the carcass plies (11) are folded in the case where plural bead cores (2) are provided and a cap ply layer (C) of cords being provided radially inwards of the tread part (5) and between the carcass ply groups (GA....GD) which has such a width that its outer both ends are terminated outward in the radial direction of the bead core (2) or bead cores and the cords of the cap ply layer (C) crossing the carcass cords of each carcass ply (11) adjacent to the cap ply layer (C), characterised in that the inclination angle of the carcass cords is gradually reduced in successive steps of 1 to 5 degrees from the first group (GA) to the third group (GC) of the carcass ply groups (GA....GD) aligned in succession from inside to outside the tyre.

2. A bias tyre according to claim 1, characterised in that the cap ply layer (C) comprises one or more cap plies (C1,C2), and at least one cap ply has a width in the range of 100 to 130% of the width (S) of the ground contacting surface in the direction of the tyre's axis.

3. A bias tyre according to claim 1 or 2, characterised in that the plurality (G) of carcass ply groups (GA...GD) comprises an inner carcass ply group (G1) folded around the bead core (2A) from the inside to the outside and an outer carcass ply group (GD) folded at the bead core (2) from the outside to the inside, and the cap ply layer (C) is positioned between the inner carcass ply group (GA) and the outer carcass ply group (GD).

4. A bias tyre according to claim 1 or 2, characterised in that said plurality (G) of carcass ply groups (GA....GD) comprises a plurality of inner carcass ply groups (GA,GB) folded at each of a plurality of bead cores (2A, 2B) in the bead part (3) from the inside to the outside, respectively, and the cap ply layer (C1) is placed between the first inner carcass ply group (GA) and the second inner carcass ply group (GB) considered sequentially from the inside in the direction of the tyre's axis among the inner carcass ply groups (GA,GB).

5. A bias tyre according to claim 1 or 2, characterised in that said plurality (G) of carcass ply groups (GA....GD) includes first (GA), second (GB) and third (GC) inner carcass ply groups each folded at each of first (2A), second (2B) and third (2C) bead cores placed sequentially from the inside in the direction of the tyre's axis in the bead part (3) to the outside, respectively, and an outer carcass ply group (GD) extending from outside the third bead core (2C) to the bottom surface thereof, and a first cap ply layer (C2) is provided between the outer carcass ply group (GD) and the third inner carcass ply group (GC), and a second cap ply layer (C1) is provided between the second inner carcass ply group (GB) and the third inner carcass ply group (GC).

6. A bias tyre according to any one of claims 1 to 5 characterised in that a thick rubber layer (9) is provided between a tread reinforcing breaker (10) and the outer carcass ply group (GD).

**Patentansprüche**

1. Ein Diagonalreifen für Flugzeuge mit einer Karkasse (7), die eine Vielzahl (G) von mindestens drei Karkassenlagengruppen (GA ... GD) umfaßt, von denen jede aus zumindest einer Karkassenlage (11) aus Karkassenkorden zusamengesetzt ist, die einen Neigungswinkel von 30 bis 45 Grad zu dem Äquator des Reifens haben und sich durch einen Laufflächenteil (5), der eine den Boden berührende Oberfläche zur Verfügung stellt, und durch Seitenwandteile (4) zu den Grundoberflächen von mindestens einem Wulstkern (2) in jedem Wulstteil (3) erstreckt, wobei die Karkassenlagengruppen (GA ... GD) durch die Faltungsrichtung der Karkassenlagen (11) bei dem Wulstkern (2) oder durch die Wulstkerne (2), um welche die Karkassenlagen (11) gefaltet sind, in dem Fall, wo plurale Wulstkerne (2) vorgesehen sind, unterschieden werden, und eine Decklagenschicht (C) aus Korden, die radial nach innen des Laufflächenteils (5) und zwischen den Karkassenlagengruppen (GA ... GD) vorgesehen ist, welche eine derartige Breite hat, daß ihre äußeren beiden Enden außerhalb in der radialen Richtung des Wulstkerns (2) oder der Wulstkerne abgeschlossen sind und daß die Korde der Decklagenschicht (C) die Karkassenkorde von jeder der Decklagenschicht (C) benachbarten Karkassenlage kreuzen, dadurch gekennzeichnet, daß der Neigungswinkel der Karkassenkorde graduell in aufeinanderfolgenden Schritten von 1 bis 5 Grad von der ersten Gruppe (GA) zu der dritten Gruppe (GC) der Karkassenlagengruppen (GA ... GD) verringert wird, die in Folge von der Innenseite zu der Außenseite des Reifens ausgerichtet sind.

2. Ein Diagonalreifen nach Anspruch 1, dadurch gekennzeichnet, daß die Decklagenschicht (C) eine oder mehr Decklagen (C1, C2) umfaßt, und mindestens eine Decklage eine Breite im Bereich von 100 bis 130 % der Breite (S) der bodenberührenden Oberfläche in der Richtung der Reifenachse aufweist.

3. Ein Diagonalreifen nach Anspruch 1 oder 2, dadurch gekennzeichnet, daß die Vielzahl (G) der Karkassenlagengruppen (GA ... GD) eine innere Karkassenlagengruppe (G1), die um den Wulstkern (2A) aus der Innenseite zu der Außenseite herum gefaltet ist, und eine äußere Karkassenlagengruppe (GD) umfaßt, die an dem Wulstkern (2) von der Außenseite zu der Innenseite gefaltet wird, und die Decklagenschicht (C) zwischen der inneren Karkassenlagengruppe (GA) und der äußeren Karkassenlagengruppe (GD) angeordnet ist.

4. Ein Diagonalreifen nach Anspruch 1 oder 2, dadurch gekennzeichnet, daß die Vielzahl (G) der Karkassenlagengruppen (GA ... GD) eine Vielzahl von inneren Karkassenlagengruppen (GA, GB) umfaßt, die bei jedem einer Vielzahl von Wulstkernen (2A, 2B) in dem Wulstteil (3) von der Innenseite zu der Außenseite jeweils gefaltet sind, und die Decklagenschicht (C1) zwischen der ersten inneren Karkassenlagengruppe (GA) und der zweiten inneren Karkassenlagengruppe (GB) angeordnet ist, nacheinanderfolgend betrachtet von der Innenseite in der Richtung der Achse des Reifens zwischen den inneren Karkassenlagengruppen (GA, GB).

5. Ein Diagonalreifen nach Anspruch 1 oder 2, dadurch gekennzeichnet, daß die Vielzahl (G) der Karkassenlagengruppen (GA ... GD) erste (GA), zweite (GB) und dritte (GC) innere Karkassenlagengruppen, die jede bei jedem der ersten (2A), zweiten (2B) bzw. dritten (2C) Wulstkerne gefaltet sind, die nacheinanderfolgend von der Innenseite in der Richtung der Achse des Reifens in dem Wulstteil (3) zu der Außenseite angeordnet sind, und eine äußere Karkassenlagengruppe (GD) umfaßt, die sich außenseitig des dritten Wulstkerns (2C) zu dessen Grundoberfläche erstreckt, und eine erste Decklagenschicht (C2) zwischen der äußeren Karkassenlagengruppe (GD) und der dritten inneren Karkassenlagengruppe (GC) vorgesehen ist, und eine zweite Decklagenschicht (C1) zwischen der zweiten inneren Karkassenlagengruppe (GB) und der dritten inneren Karkassenlagengruppe (GC) vorgesehen ist.

6. Ein Diagonalreifen nach einem der Ansprüche 1 bis 5, dadurch gekennzeichnet, daß eine dicke Gummischicht (9) zwischen einem laufflächenverstärkenden Gürtel (10) und der äußeren Karkassenlagengruppe (GD) vorgesehen ist.

## Revendications

1. Pneumatique à carcasse diagonale pour aéronef, comprenant une carcasse (7) ayant plusieurs (G) groupes (GA,...GD) de nappes de carcasse en nombre égal au moins à trois, composés chacun d'au moins une nappe de carcasse (11) formée de câblés de carcasse ayant un angle d'inclinaison compris entre 30 et 45° avec l'équateur du pneumatique et disposés dans une partie (5) de bande de roulement, formant une surface de contact avec le sol, et dans des parties (4) de flancs vers les surfaces inférieures d'au moins une tringle (2) dans chaque partie de talon (3), les groupes de nappes de carcasse (GA...GD) se distinguant par le sens de pliage des nappes de carcasse (11) au niveau de la tringle (2) ou par les tringles (2) autour desquelles les nappes de carcasse (11) sont repliées dans le cas où plusieurs tringles (2) sont présentes, et une couche (C) de nappes de couverture formée de câblés disposée radialement à l'intérieur de la partie (5) de bande de roulement et entre les groupes (GA...GD) de nappes de carcasse, cette couche de nappes de ceinture ayant une largeur telle que ses deux extrémités externes se terminent, dans la direction radiale, vers l'extérieur de la tringle (2) ou des tringles, et les câblés de la couche (C) de nappes de couverture recoupant les câblés de carcasse de chaque nappe de carcasse (11) adjacente à la couche (C) de nappes de couverture, caractérisé en ce que l'angle d'inclinaison des câblés de la carcasse diminue progressivement par pas successifs de 1 à 5° du premier groupe (GA) au troisième groupe (GC) des groupes de nappes de carcasse (GA...GD) alignées successivement de l'intérieur vers l'extérieur du pneumatique.

2. Pneumatique à carcasse diagonale selon la revendication 1, caractérisé en ce que la couche (C) de nappes de couverture comprend une ou plusieurs nappes de couverture (C1, C2), et au moins une nappe de couverture a une largeur comprise entre 100 et 130 % de la largeur (S) de la surface de contact avec le sol dans la direction de l'axe du pneumatique.

3. Pneumatique à carcasse diagonale selon la revendication 1 ou 2, caractérisé en ce que le nombre (G) de groupes (GA...GD) de nappes de carcasse comprend un groupe interne (G1) de nappes de carcasse repliées autour de la tringle (2A) de l'intérieur vers l'extérieur et un groupe externe (GD) de nappes de carcasse repliées sur la tringle (2) de l'extérieur vers l'intérieur, et la couche (C) de nappes de couverture est placée entre le groupe interne (GA) de nappes de carcasse et le groupe externe (GD) de nappes de carcasse.

4. Pneumatique à carcasse diagonale selon la revendication 1 ou 2, caractérisé en ce que le nombre (G) de groupes (GA...GD) de nappes de carcasse comprend plusieurs groupes internes (GA, GB) de nappes de carcasse repliées sur chacune de plusieurs tringles (2A, 2B) de la partie de talon (3) de l'intérieur vers l'extérieur respectivement, et la couche (C1) de nappes de couverture est placée entre le premier groupe interne (GA) et le second groupe interne (GB) de nappes de carcasse considérés successivement depuis l'intérieur dans la direction de l'axe du pneumatique, parmi les groupes internes (GA, GB) de nappes de carcasse.

5. Pneumatique à carcasse diagonale selon la revendication 1 ou 2, caractérisé en ce que le nombre (G) de groupes (GA...GD) de nappes de carcasse comprend un premier (GA), un second (GB) et un troisième (GC) groupe interne de nappes de carcasse, repliés chacun sur une première (2A), une seconde (2B) ou une troisième (2C) tringle placées successivement depuis l'intérieur dans la direction de l'axe du pneumatique dans la partie de talon (3) vers l'extérieur respectivement, et un groupe externe (GD) de nappes de carcasse allant de l'extérieur de la troisième tringle (2C) vers sa surface inférieure, et une première couche (C2) de nappes de couverture est placée entre le groupe externe (GD) de nappes de carcasse et le troisième groupe interne (GC) de nappes de carcasse, et une seconde couche (C1) de nappes de couverture est placée entre le second groupe interne (GB) et le troisième groupe interne (GC) de nappes de carcasse.

6. Pneumatique à carcasse diagonale selon l'une quelconque des revendications 1 à 5, caractérisé en ce qu'une couche épaisse de caoutchouc (9) est placée entre une nappe sommet (10) d'armature de bande de roulement et le groupe externe (GD) de nappes de carcasse.

# FIG.1

# FIG.2

# FIG.3